**Europäisches Patentamt**

**European Patent Office**

**Office européen des brevets**

(19)

(11) Veröffentlichungsnummer : **0 417 237 B1**

(12)

# EUROPÄISCHE PATENTSCHRIFT

(45) Veröffentlichungstag der Patentschrift :
**11.11.92 Patentblatt 92/46**

(51) Int. Cl.⁵ : **G01L 9/12**

(21) Anmeldenummer : **90904838.1**

(22) Anmeldetag : **24.03.90**

(86) Internationale Anmeldenummer :
**PCT/EP90/00482**

(87) Internationale Veröffentlichungsnummer :
**WO 90/12299 18.10.90 Gazette 90/24**

(54) **KAPAZITIVER DRUCKSENSOR UND VERFAHREN ZU SEINER HERSTELLUNG.**

(30) Priorität : **01.04.89 DE 3910646**

(43) Veröffentlichungstag der Anmeldung :
**20.03.91 Patentblatt 91/12**

(45) Bekanntmachung des Hinweises auf die
Patenterteilung :
**11.11.92 Patentblatt 92/46**

(84) Benannte Vertragsstaaten :
**AT BE CH DE DK ES FR GB IT LI LU NL SE**

(56) Entgegenhaltungen :
**EP-A- 0 097 339**
**EP-A- 0 111 348**
**DE-A- 3 137 219**

(73) Patentinhaber : **ENDRESS U. HAUSER GMBH
U. CO.**
**Hauptstr. 1, Postfach 1261**
**W-7864 Maulburg (DE)**

(72) Erfinder : **DITTRICH, Gerhard**
**Kieler Kamp 48**
**W-2320 Plön (DE)**
Erfinder : **HEGNER, Frank**
**Chrischonastr. 41**
**W-7850 Lörrach (DE)**
Erfinder : **KLÄHN, Thomas**
**Zasiusstrasse 81**
**W-7800 Freiburg i. Br. (DE)**

(74) Vertreter : **Morstadt, Volker, Dipl.-Ing.**
**c/o Endress + Hauser Flowtec AG**
**Kägenstrasse 7 Postfach 435**
**CH-4153 Reinach BL 1 (CH)**

EP 0 417 237 B1

## Beschreibung

Die Erfindung besteht nach dem Wortlaut des Anspruchs 1 in einem kapazitiven Drucksensor mit zwei Platten aus Aluminiumoxid-Keramik, die im Umfangsbereich unter Bildung einer dicht abgeschlossenen Kammer in einem definierten bestand parallel zueinander zusammengefügt sind; von denen wenigstens eine als elastische Membran ausgebildet ist; von denen wenigstens eine auf der der anderen Platte zugewandten Fläche im Inneren der Kammer eine oder mehrere Kondensatorelektroden trägt; auf deren Oberfläche je eine festhaftende, chemisch stromlos aus einer wässrigen Lösung abgeschiedene, reine Nickelschicht aufgebracht ist, in der durch Strukturierung die Kondensatorelektroden ausgebildet sind; die im Umfangsbereich durch ein die Nickelschichten verbindendes Metallot miteinander verbunden sind und durch deren eine Platte mindestens zwei, mit der Nickelschicht ebenfalls metallisierte Durchführungslöcher als Anschlussleiter hindurchgeführt sind, die die Kondensatorelektroden mit einer ausserhalb der Kammer angeordneten elekronischen Schaltung verbinden.

Die Erfindung besteht ferner nach dem Wortlant des Anspruchs 4 in einem Verfahren zum Herstellen eines Drucksensors, bei dem zwei Platten aus Aluminiumoxid-Keramik hergestellt werden, von denen wenigstens eine Platte als elastische Membran ausgebildet ist; in wenigstens einer der beiden Platten Durchführungslöcher gebildet werden; auf die Oberfläche jeder Platte und auf die Umfangsflächen der Durchführungslöcher eine festhaftende reine Nickelschicht chemisch stromlos aus einer wässrigen Lösung aufgebracht wird; die Nickelschichten zur Bildung von Kondensatorelektroden und/oder von Leiterbahnen strukturiert werden; die beiden Platten unter Einfügen eines Formteils aus Metallot zwischen im Umfangsbereich befindliche Teile der Nickelschichten aufeinandergelegt werden und die Anordnung bis zum Schmelzen des Metallots erhitzt wird.

In der DE-A 27 09 945, die den US-A 41 77 496, 43 88 688 und 44 26 673 entspricht, ist ein kapazitiver Drucksensor mit zwei Platten aus Aluminiumoxid-Keramik beschrieben, die im Umfangsbereich unter Bildung einer dicht abgeschlossenen Kammer in einem definierten Abstand parallel zueinander zusammengefügt sind, wobei wenigstens eine der beiden Platten als elastische Membran ausgebildet ist und wobei wenigstens eine der beiden Platten auf der der anderen Platte zugewandten Fläche im Innern der Kammer eine oder mehrere Kondensatorelektroden trägt, die durch Anschlussleiter mit einer ausserhalb der Kammer angeordneten elektronischen Schaltung verbunden sind.

Ferner sind bei diesem vorbeschriebenen Drucksensor auf die einander zugewandten Flächen der beiden Platten zentrale kreisförmige Metallschichten als Kondensatorelektroden niedergeschlagen, von denen Leiterstreifen aus Metall abgehen, welche als Verbindungsleitungen dienen und über den Aussenrand der Platten in elektrische Anschlussleiter übergehen. Die beiden Platten sind im Umfangsbereich durch eine geschmolzene Glasfritte zusammengefügt, durch die die Anschlussleiter dicht hindurchgeführt sind.

In ähnlicher Weise ist ein in der DE-A 22 21 062 beschriebener Drucksensor ausgebildet, der einerseits jedoch aus Glas oder Quarz besteht und dessen Bestandteile andererseits schalenförmig ausgebildet und am Rand unmittelbar miteinander verschmolzen sind, wobei die Anschlussleiter ebenfalls durch die Verbindungsstelle nach aussen geführt sind. Bei diesem Drucksensor sind auf die Aussenflächen der beiden schalenförmigen Teile zusätzlich metallische Dünnfilmbeläge aufgebracht, die teilweise als elektrostatische Abschirmungen dienen, teilweise als temperatur abhängige Widerstände zur Temperaturkompensation, die aus Nickel bestehen Können.

Die Herstellung dieser vorbeschriebenen Drucksensoren ist aufwendig. Ferner sind die Drucksensoren mechanisch und thermisch empfindlich, weil die Verbindung mittels Glasfritte

oder durch unmittelbares Verschmelzen von Glas- oder Quarzteilen nur eine eingeschränkte mechanische Festigkeit und Temperaturwechselbeständigkeit aufweist. Auch hat sich die Verbindung mittels Glasfritte für Drucksensoren, deren Platten aus höchstreiner Aluminiumoxid-Keramik bestehen, als unbefriedigend erwiesen. Schliesslich ist auch die Verbindung der durch den Randbereich nach aussen geführten Anschlussleiter mit der zugehörigen elektronischen Schaltung umständlich.

Bei einem in der DE-A 31 37 219 beschriebenen Drucksensor, dessen Platten aus Glas, Keramik oder dergleichen bestehen, wird der definierte Abstand zwischen den Platten durch einen zwischen sie eingefügten Glasring erzielt, während die Verbindung zwischen den Platten durch einen den Glasring umschliessenden Dichtungsring hergestellt wird. Der Dichtungsring kann aus Lotpaste, Epoxidharz oder einer Klebeschmelzfolie bestehen. Die Elektroden bedecken nur die innerhalb des Glasrings liegenden Flächenbereiche der Platten, so dass das Material des Dichtungsrings in unmittelbarem Kontakt mit dem Material der Platten steht. Die Festigkeit der auf diese Weise hergestellten Verbindung erweist sich insbesondere dann als unbefriedigend, wenn die Platten aus höchstreiner Aluminiumoxid-Keramik bestehen, die das bevorzugte Material für Drucksensoren dieser Art ist. Schliesslich bleibt das Problem der Herausführung der Anschlussleiter bestehen, die in dieser Druckschrift nur schematisch andeutet sind.

In der EP-A 97 339 ist ein Drucksensor beschrieben, bei dem die Anschlussleiter durch metallisierte Löcher gebildet sind, die durch eine der Platten hindurchgeführt sind. Dieser Drucksensor besteht aus zwei starren Platten aus Borsilikatglas, zwischen die eine Scheibe aus Silicium eingefügt ist, die mehrere Abschnitte verringerter Dicke hat, die die Membranen des Drucksensors bilden. Die Siliciumscheibe dient zugleich als Abstandshalter zwischen den Borsilikatglasplatten, mit denen sie in unmittelbarem Kontakt steht, doch ist über die Art der

Verbindung zwischen dem Borsilikatglas und dem Silicium nichts ausgesagt.

Ein in der US-A 3 952 234 beschriebener Drucksensor hat eine starre Platte aus Keramik, während die als elastische Membran ausgebildete andere Platte die Stirnwand eines Metallgehäuses ist, die auf der der starren Platte zugewandten Seite mit Aluminiumoxid-Keramik beschichtet ist. Die Kondensatorelektroden sind auf die einander zugewandten Keramikflächen mittels Siebdrucktechnik oder durch galvanisches Abscheiden aufgebracht und bestehen aus Gold oder Silber. Das Problem der Verbindung der beiden Platten besteht bei diesem bekannten Drucksensor nicht, da die starre Platte in das Metallgehäuse eingesetzt ist und durch einen Dichtungsring in formschlüssiger Anlage an einer ringförmigen Schulter des Metallgehäuses gehalten wird, die als Abstandshalter dient.

Aufgabe der Erfindung ist die Schaffung eines Drucksensors der eingangs angegebenen Art, der einfach und preisgünstig herstellbar ist und sehr gute mechanische, thermische und elektrische Eigenschaften aufweist.

Bei dem Drucksensor nach der Erfindung wird die Tatsache ausgenutzt, daß Verfahren bekannt sind, mit denen auf die Oberflächen von Aluminiumoxid-Keramikteilen durch chemische Abscheidung sehr festhaftende Nickelschichten aufgebracht werden können, also auf eine sehr einfache und wirtschaftliche Weise, die insbesondere für die Massenfertigung geeignet ist.

Bei dem erfindungsgemäßen Drucksensor erfüllen die in einem einzigen Arbeitsgang aufgebrachten Nickelschichten eine Reihe von Funktionen, die einerseits sehr gute mechanische, thermische und elektrische Eigenschaften des Drucksensors ergeben und andererseits eine einfache und wirtschaftliche Herstellung des Drucksensors ermöglichen. Die innerhalb der Kammer liegenden Rondensatorelektroden werden durch Strukturierung, beispielsweise auf photolithographischem Wege nach Art von mikroelektronischen Schaltungen, aus den gleichen Nickelschichten gebildet. Besonders vorteilhaft ist es, daß die Anschlußleiter der Kondensatorelektroden dadurch gebildet werden, daß Durchführungslöcher, die durch die die Kondensator-Elektroden tragende Platte hindurchgehen, bei der Bildung der Nickelschichten metallisiert, also vernickelt, werden. Schließlich ergeben die Nickelschichten infolge ihrer ausgezeichneten Haftung auf der Aluminlumoxid-Keramik auch eine mechanisch und thermisch besonders gute und feste Verbindung der beiden Platten durch Verlöten mittels eines zugleich als Abstandshalter dienenden Metallots.

Darüber hinaus können die Nickelschichten noch für weitere Zwecke vorteilhaft ausgenutzt werden. So können die auf die Außenflächen der Platten aufgebrachten Nickelschichten unmittelbar als elektrostatische Abschirmungen wirken. Ferner lassen sich durch Strukturierung der Nickelschichten auch Leiterbahnen der zugehörigen elektronischen Schaltung unmittelbar auf einer Außenfläche des Drucksensors bilden.

Vorteilhafte Ausgestaltungen und Weiterbildungen des Drucksensors nach der Erfindung und des Verfahrens zu seiner Herstellung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigt:

Fig. 1 einen Längsschnitt durch einen Drucksensor nach der Erfindung,

Fig. 2 eine Querschnittsansicht des Drucksensors längs der Linie II-II von Fig. 1 und

Fig. 3 bis 6 Bestandteile des Drucksensors von Fig. 1 und 2 in verschiedenen Stadien seiner Herstellung.

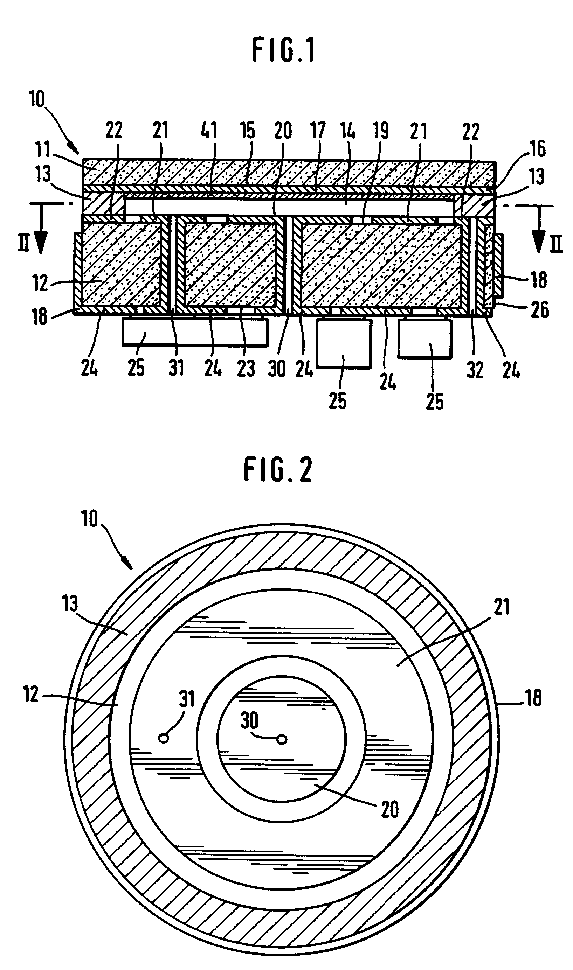

Der in den Fig. 1 und 2 dargestellte Drucksensor 10 hat zwei Platten 11 und 12 aus Keramik, die durch ein rings um den Umfang verlaufendes Verbindungsmaterial 13 in einem definierten Abstand zusammengefügt sind, so daß zwischen den einander parallel gegenüberliegenden Flächen der beiden Platten eine Rammer 14 gebildet ist. Die Platte 12 ist verhältnismäßig dick, so daß sie einen starren Grundkörper bildet, während die Platte 11 verhältnismäßig dünn und elastisch ist, so daß sie als Membran wirkt, die sich unter der Einwirkung eines äußeren Drucks verformen kann. Die Platten 11 und 12 bestehen aus Aluminiumoxid-Keramik ($Al_2O_3$).

Die der Kammer 14 zugewandte Fläche 15 der Platte 11 ist vollständig mit einer dünnen, festhaftenden, reinen Nickelschicht 16 bedeckt, die eine Kondensatorelektrode 17 bildet. Desgleichen ist auf alle Flächen der Platte 12 eine dünne, festhaftende, reine Nickelschicht 18 aufgebracht. Auf der der Rammer 14 zugewandten Fläche 19 ist die Nickelschicht 18 so strukturiert, daß sie in eine zentrale kreisrunde Kondensatorelektrode 20, eine diese im Abstand umgebende kreisringförmige Kondensatorelektrode 21 und einen ringförmigen Randbereich 22 unterteilt ist. Diese Bereiche sind voneinander elektrisch isoliert.

Auf der der Rammer 14 abgewandten Fläche 23 der Platte 12 ist die Nickelschicht 18 zur Bildung von Leiterbahnen 24 gleichfalls strukturiert. Die Leiterbahnen 24 können zur Herstellung der erforderlichen elektrischen Verbindungen zwischen dem Drucksensor 10 und einer elektronischen Schaltung dienen, oder sie können, wie in Fig. 1 angedeutet ist, unmittelbar die Leiter einer elektronischen Schaltung bilden, deren Bauteile 25 auf die Leiterbahnen 24 aufgesetzt sind.

Der auf die Umfangsfläche 26 der Platte 12 aufgebrachte Teil der Nickelschicht 18 dient als elektrostatische Abschirmung und wird im Betrieb des Drucksensors an ein geeignetes Potential, gewöhnlich das Massepotential, gelegt. Deshalb ist auch dieser Teil der Nickelschicht 18 strukturiert, um unerwünschte elektrische Verbindungen zu unterbrechen.

Bei dem beschriebenen Drucksensor, dessen Platten 11 und 12 aus Aluminiumoxid bestehen, werden die Nickelschichten 16 und 18 nach einem bekannten Verfahren durch chemische Metallabscheidung auf die Oberflächen der Platten 11 und 12 aufgebracht.

Da die zu verbindenden Randbereiche der beiden Platten 11 und 12 metallisiert sind, ist das Verbindungsmaterial ein Metallot 13, das so gewählt ist, daß es eine möglichst feste und dichte Lötverbindung ergibt. Natürlich muß der Schmelzpunkt des Metallots 13 unter dem Schmelzpunkt der Nickelschichten liegen; es eignet sich beispielsweise ein Silber-Rupfer-Hartlot.

Zur elektrischen Verbindung der Kondensatorelektroden 17, 20 und 21 mit den Leiterbahnen 24 sind in der Platte 12 Durchführungslöcher 30, 31 und 32 angebracht, deren Umfangsflächen beim Aufbringen der Nickelschicht 18 gleichfalls vernickelt worden sind. Die auf die Umfangsflächen der Durchführungslöcher 30 und 31 aufgebrachten Nickelschichten stellen zusammenhängende, elektrisch leitende Verbindungen zwischen den Kondensatorelektroden 20, 21 und den an den Austrittsstellen der Durchführungslöcher 30, 31 auf der Fläche 23 gebildeten Leiterbahnen 24 her. Die Nickelschicht im Durchführungsloch 32 verbindet in entsprechender Weise den vernickelten Randbereich 22 mit einer der Leiterbahnen 24. Da dieser durch das Metallot 13 elektrisch leitend mit der Nickelschicht 16 verbunden ist, ist auf diese Weise die Kondensatorelektrode 17 über das vernickelte Durchführungsloch 32 mit einer der Leiterbahnen 24 verbunden.

Die Funktionsweise des Drucksensors 10 ist an sich bekannt. Die als Membran wirkende Platte 11 wird unter der Einwirkung eines äußeren Drucks mehr oder weniger stark durchgebogen, so daß sich der bestand ihres zentralen Bereichs von der zentralen Kondensatorelektrode 20 in Abhängigkeit vom Druck ändert. Demzufolge hängt auch die Kapazität zwischen der zentralen Kondensatorelektrode 20 und der ihr gegenüberliegenden Kondensatorelektrode 17 vom Druck ab. Diese Kapazität wird durch die elektronische Schaltung, mit der die Kondensatorelektroden 20 und 17 über die Nickelschichten in den Durchführungslöchern 30 bzw. 32 verbunden sind, in ein die Kapazität darstellendes elektrisches Signal umgewandelt.

Dagegen ändert sich der bestand zwischen dem Randbereich der Platte 11 und der diesem Randbereich gegenüberliegenden ringförmigen Kondensatorelektrode 21 bei einer druckabhängigen Verformung nur sehr wenig, so daß die Kapazität zwischen der ringförmigen Kondensatorelektrode 21 und der ihr gegenüberliegenden Kondensatorelektrode 17 unabhängig vom Druck im wesentlichen konstant bleibt. Diese Kapazität kann daher in der elektronischen Schaltung, mit der die ringförmige Elektrode 21 über die Nickelschicht im Durchführungsloch 31 verbunden ist, als Bezugsgröße verwendet werden.

Bei dem in Fig. 1 dargestellten Drucksensor 10 ist die Kammer 14 rings um den Umfang durch die vom Metallot 13 gebildete Lötverbindung dicht nach außen abgeschlossen, sie steht jedoch über die Durchführungslöcher 30 und 31 mit dem Außenraum in Verbindung, so daß sie unter dem Atmosphärendruck steht. Der Drucksensor 10 wirkt daher als Relativdrucksensor. Wenn der Drucksensor 10 zur Messung des absoluten Drucks verwendet werden soll, muß die Rammer 14 evakuiert und hermetisch dicht abgeschlossen sein. Dies kann auf einfache Weise dadurch geschehen, daß der dargestellte Drucksensor in ein Vakuum eingebracht wird und die Durchführungslöcher 30 und 31 darin zugelötet werden.

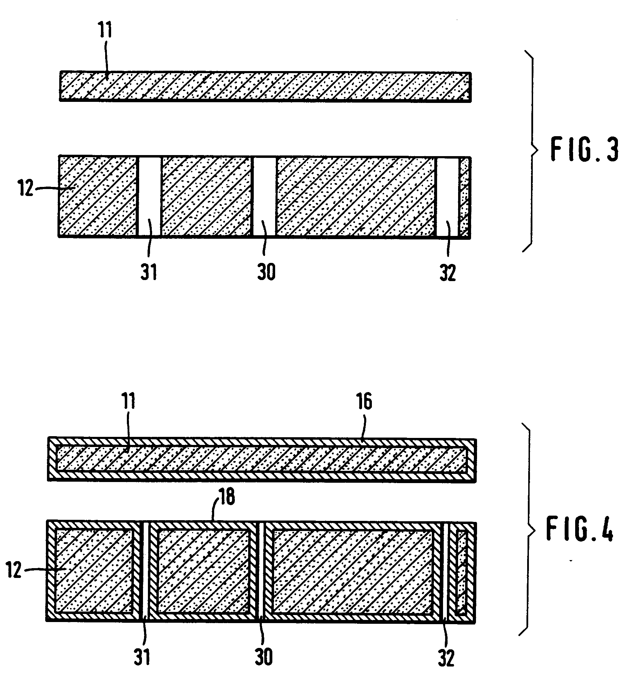

Anhand der Figuren 3 bis 6 soll ein Ausführungsbeispiel eines Verfahrens zum Herstellen des in den Figuren 1 und 2 dargestellten Drucksensors beschrieben werden.

Zunächst werden die beiden Platten 11 und 12, wie in Fig. 3 dargestellt ist, aus Aluminiumoxid $Al_2O_3$ mit etwa 96% Reinheit hergestellt. Die Platte 12 wird an den erforderlichen Stellen mit den Durchführungslöchern 30, 31 und 32 versehen. Das Aspektverhältnis der Durchführungslöcher 30, 31, 32, d.h. das Verhältnis ihrer Länge zu ihrem Durchmesser, muß ausreichend klein sein, damit eine gleichmäßige Beschichtung der Umfangsflächen der Durchführungsflächen über deren ganze Länge bei der anschließenden Nickelabscheidung gewährleistet ist. Bei einer Dicke der Platte 12 und demzufolge einer Länge der Durchführungslöcher 30, 31, 32 von etwa 6 mm sollen die Durchführungslöcher einen Durchmesser von etwa 0,5 mm bis 1 mm haben. Dieser Durchmesser ist in den Zeichnungen der Deutlichkeit wegen übertrieben groß dargestellt.

Es sind verschiedene Verfahren bekannt, mit denen festhaftende Nickelschichten auf die Oberfläche von Keramikteilen aufgebracht werden können. Da bei dem beschriebenen Beispiel die Platten 11 und 12 aus Aluminiumoxid bestehen, wird für die Metallisierung ein Verfahren angewendet, mit welchem eine reine Nickelschicht durch chemische Metallabscheidung unmittelbar auf die Oberfläche von Werkstücken aus Aluminiumoxid aufgebracht werden kann. Ein solches Verfahren ist beispielsweise in dem Aufsatz "Pure Electroless Nickel Coating on Alumina" von Bhatgadde und Mahapatra in der Zeitschrift "Metal Finishing", Vol. 86 Nr. 3, März 1988, Seiten 31/32 beschrieben.

Die Verwendung von reinem Nickel für die Metallisierungsschichten 16 und 18 ergibt im Vergleich zu den sonst üblicherweise für die Beschichtung durch chemische Metallabscheidung verwendeten Metallen und Legierungen beträchtliche Vorteile:

1. Reines Nickel hat einen hohen Schmelzpunkt von 1450°C und erlaubt daher ein Hartlöten bei wesentlich höheren Tempe raturen als beispielsweise die üblicherweise abgeschiedenen Nickel-Phosphor-Schichten, die bei einem Phosphoranteil von 10% einen Schmelzpunkt von etwa 700°C haben.

2. Die Nickelschichten haben nach dem Hartlöten bei einer Temperatur von etwa 800°C bis 1000°C noch eine sehr gute Haftfestigkeit zu Aluminiumoxid-Keramik, beispielsweise im Gegensatz zu Rupferschichten, die nach Erhitzung über etwa 400°C die Haftfestigkeit zu Aluiniumoxid-Keramik verlieren.

3. Die Löslichkeit von Nickel im flüssigen Lot ist sehr gering.

4. Reines Nickel ist photolitographisch sehr gut strukturierbar.

Fig. 4 zeigt die beiden Platten 11 und 12 nach der Nickelabscheidung. Die Dicke der Nickelschichten 16 und 18 ist, wie auch in den übrigen Figuren, der Deutlichkeit wegen übertrieben groß dargestellt; sie beträgt in Wirklichkeit etwa 5 μm bis 20 μm. Die Nickelschichten bedecken sämtliche Oberflächen der beiden Platten 11 und 12 sowie die Wandflächen der Durchführungslöcher 30, 31 und 32. Es ist zu bemerken, daß eine gleichmäßige Beschichtung im Innern der Durchführungslöcher bei dem angegebenen Aspektverhältnis nur durch chemische Metallabscheidung möglich ist, da bei galvanischer Beschichtung keine gleichmäßige Potentialverteilung im Innern der Durchführungslöcher erzielt werden kann.

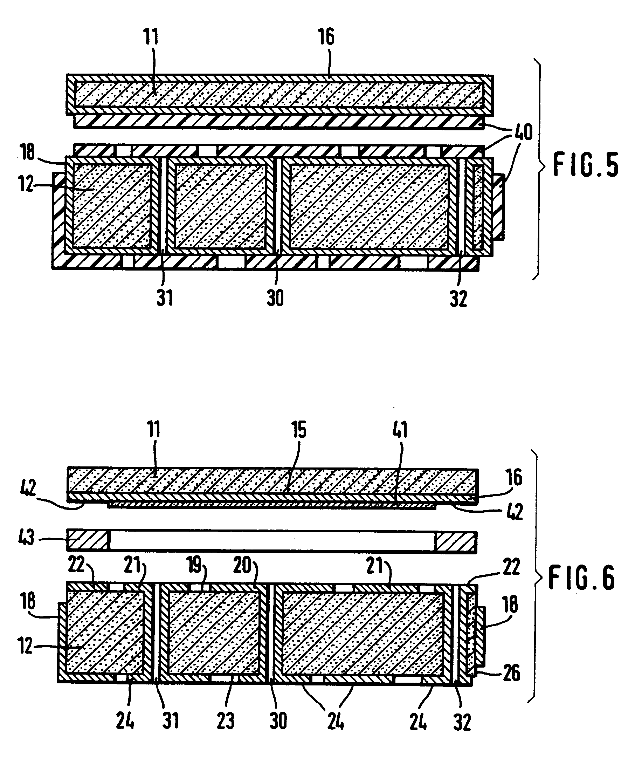

Anschließend werden die Nickelschichten 16 und 18 strukturiert. Das Strukturieren geschieht vorzugsweise nach dem zur Herstellung mikroelektronischer Schaltungen allgemein bekannten photolithographischen Verfahren. Dabei werden die Oberflächen der Nickelschichten 16 und 18 mit einem lichtempfindlichen Ätzschutzmaterial ("Photoresist") bedeckt, das anschließend durch eine Maske belichtet und dann entwickelt wird. Durch das Entwickeln werden die belichteten Teile der Ätzschutzschicht gehärtet, und die nicht belichteten Teile der Ätzschutzschicht können anschließend entfernt werden. Fig. 5 zeigt die Platten 11 und 12 mit den belichteten und entwickelten Ätzschutzschichten 40 nach dem Entfernen der nicht belichteten Teile. Wie zu erkennen ist, sind alle Teile der Nickelschichten 16 und 18, die erhalten bleiben sollen, von den Ätzschutzschichten 40 bedeckt, während alle Teile, die entfernt werden sollen, freigelegt sind.

Das Entfernen der freigelegten Teile der Nickelschichten 16 und 18 geschieht durch Ätzen. Für Nickel eignet sich als Ätzmittel Eisen(III) chlorid ($FeCl_3$) oder Salpetersäure. Nachdem die freigelegten Teile der Nickelschicht weggeätzt sind, werden die Ätzschutzschichten 40 entfernt.

Vor dem Verlöten der beiden Platten 11 und 12 wird die Nikkelschicht 16 mit einer Lötstopschicht 41 bedeckt, die nur den zu verlötenden ringförmigen Randbereich 42 freiläßt. Die Lötstopschicht 41 wird beispielsweise durch Aufstäuben von Siliciumdioxid ($SiO_2$) mit einer Dicke von 0,5 μm gebildet.

Nunmehr werden die beiden Platten 11 und 12 aufeinandergelegt, wobei zwischen die zu verlötenden Randbereiche 22 und 42 der Nickelschichten 18 und 16 ein ringförmiges Formteil 43 aus dem Metallot eingelegt wird (Fig. 6). Die beiden Platten 11 und 12 werden mit dem dazwischen angeordneten Formteil 43 aus Metallot in ein Hochvakuum oder in ein Schutzgas eingebracht und darin bis über die Schmelztemperatur des Metallots erhitzt. Dabei verhindert die Lötstopschicht 41 ein Fließen des Metallots über die Fläche der Nickelschicht 16. Nach dem Abkühlen sind dann die beiden Platten des Drucksensors fest miteinander verbunden. Die feste Verbindung ist insbesondere durch die hohe Haftfestigkeit der Nickelschicht auf der Aluminiumoxid-Keramik bedingt, die größer als die Festigkeit der Aluminiumoxid-Keramik selbst ist. Dadurch ergibt sich eine hohe Zug- und Scherfestigkeit der Membraneinspannung und eine sehr geringe Kriechneigung. Ferner weist die Verbindung eine hohe Temperaturwechselbeständigkeit auf, und sie ist praktisch frei von Hysterese.

Im Hinblick auf die Eigenschaften des Drucksensors ergibt die Verwendung von reinem Nickel für die die Membranelektrode bildende Schicht 16 die weiteren Vorteile, daß sie

1. keine oder nur geringe Eigenspannungen,
2. eine geringe Biegesteifigkeit und
3. eine hohe Elastizität bzw. Duktilität

aufweist. Insbesondere aufgrund der beiden ersten Eigenschaften ist die von der Nickelschicht 16 auf die Membran 11 ausgeübte Rückwirkung vernachlässigbar.

Wie zu erkennen ist, verbleibt die Lötstopschicht 41 in dem fertigen Drucksensor. Die Eigenschaften des Drucksensors werden dadurch in keiner Weise beeinträchtigt; vielmehr ergibt die Lötstopschicht 41 in gewissen Fällen zusätzliche Vorteile. Wenn beispielsweise der Drucksensor als Relativdrucksensor ausgebildet ist, bei dem die Rammer 14 mit einer äußeren Gasatmosphäre in Verbindung steht, kann Feuchtigkeit in die Rammer 14 gelangen und sich dort als Kondensat niederschlagen. Die Lötstopschicht 41 dient dann als Korrosionsschutzschicht, die eine Zerstörung der Nickelschicht 16 verhindert.

**Patentansprüche**

1. Kapazitiver Drucksensor (10) mit zwei Platten (11, 12) aus Aluminiumoxid-Keramik,
   - die im Umfangsbereich unter Bildung einer dicht abgeschlossenen Kammer (14) in einem definierten Abstand parallel zueinander zusammengefügt sind;
   - von denen wenigstens eine (11) als elastische Membran ausgebildet ist;
   - von denen wenigstens eine (12) auf der der anderen Platte (11) zugewandten Fläche im Inneren der Kammer (14) eine oder mehere Kondensatorelektroden (17, 20, 21) trägt;
   - auf deren Oberflächen je eine festhaftende, chemisch stromlos aus einer wässrigen Lösung abgeschiedene, reine Nickelschicht (16, 18) aufgebracht ist, in der durch Strukturierung die Kondensatorelektroden (17, 20, 21) ausgebildet sind;
   - die im Umfangsbereich durch ein die Nickelschichten (16, 18) verbindendes Metallot (13) miteinander verbunden sind und
   - durch deren eine Platte (12) mindestens zwei mit der Nickelschicht ebenfalls metallisierte Durchführungslöcher (30, 31, 32) als Anschlussleiter hindurchgeführt sind, die die Kondensatorelektroden mit einer ausserhalb der Kammer angeordneten elektronischen Schaltung verbinden.

2. Drucksensor nach Anspruch 1, bei dem wenigstens eines (32) der vernickelten Löcher über das Metallot (13) mit einer von der anderen Platte getragenen Kondensatorelektrode (16) in elektrisch leitender Verbindung steht.

3. Drucksensor nach Anspruch 1 oder 2, bei dem auf der der Kammer (14) abgewandten Fläche einer der beiden Platten (12) Leiterbahnen (24) durch Strukturierung der Nickelschicht (18) gebildet sind.

4. Verfahren zum Herstellen eines Drucksensors, bei dem
   - zwei Platten (11, 12) aus Aluminiumoxid-Keramik hergestellt werden, von denen wenigstens eine Platte als elastische Membran ausgebildet ist;
   - in wenigstens einer der beiden Platten Durchführungslöcher (30, 31, 32) gebildet werden;
   - auf die Oberfläche jeder Platte (11, 12) und auf die Umfangsflächen der Durchführungslöcher eine festhaftende reine Nickelschicht (16, 18) chemisch stromlos aus einer wässrigen Lösung aufgebracht wird;
   - die Nickelschichten zur Bildung von Kondensatorelektroden (17, 20, 21) und/oder von Leiterbahnen (24) strukturiert werden;
   - die beiden Platten (11, 12) unter Einfügung eines Formteils aus Metallot (13) zwischen im Umfangsbereich befindliche Teile der Nickelschichten (16, 18) aufeinandergelegt werden und
   - die Anordnung bis zum Schmelzen des Metallots erhitzt wird.

5. Verfahren nach Anspruch 4, bei dem die Oberflächenbereiche einer Nickelschicht, die mit dem zu verlötenden Umfangsbereich zusammenhängen, aber nicht verlötet werden sollen, vor dem Verlöten mit einer Lötstopschicht (41) bedeckt werden.

6. Verfahren nach Anspruch 5, bei dem die Lötstopschicht (41) aus Siliciumdioxid gebildet wird.

7. Verfahren nach einem der Ansprüche 4 bis 6, bei dem
   - zur Strukturierung der Nickelschichten eine strukturierte Ätzschutzschicht aufgebracht wird,
   - die nicht von der Ätzschutzschicht bedeckten Teile der Nickelschichten weggeätzt werden und dann
   - die Ätzschutzschicht entfernt wird.

8. Verfahren nach Anspruch 7, bei dem die Ätzschutzschicht photolithographisch gebildet wird.

**Claims**

1. Capacitive pressure sensor (10) comprising two disks (11, 12) of alumina ceramic
   - which are joined together around the periphery in a defined spaced relationship and parallel to each other, forming a sealed chamber (14);
   - of which at least one (11) is designed as an elastic diaphragm;
   - of which at least one (12) supports one or more capacitor electrodes (17, 20, 21) inside the chamber (14) on the surface facing the other disk (11);
   - the surface of each of which is covered with a firmly adhering, pure nickel coating (16, 18) which is applied by electroless deposition from an aqueous solution and in which the capacitor electrodes (17, 20, 21) are formed by patterning;

- which are joined together around the periphery by a solder metal (13) which bonds the nickel coatings (16, 18) together, and
- one (12) of which has at least two through holes (30, 31, 32) whose walls are also covered with the nickel coating, whereby the capacitor electrodes are connected to an electronic circuit disposed outside the chamber.

2. A pressure sensor as claimed in claim 1 wherein at least one (32) of the nickel-plated holes is electrically connected via the solder metal (13) to a capacitor electrode (16) supported by the other disk.

3. A pressure sensor as claimed in claim 1 or 2 wherein on the surface of one of the two disks (12) facing away from the chamber (14), conductor tracks (24) are formed by patterning the nickel coating (18).

4. Method of manufacturing a pressure sensor wherein
- two disks (11, 12) are made from alumina ceramic, at least one of them being designed as an elastic diaphragm;
- through holes (30, 31, 32) are formed in at least one of the two disks;
- a firmly adhering pure nickel coating (16, 18) is applied to the surface of each of the disks (11, 12) and to the walls of the through holes by electroless deposition from an aqueous solution;
- the nickel coatings are patterned to form capacitor electrodes (17, 20, 21) and/or conductor tracks (24);
- the two disks (11, 12) are placed one on top of the other, with a formed part of solder metal (13) being inserted between peripheral portions of the nickel coatings (16, 18), and
- the assembly is heated until the solder metal melts.

5. A method as claimed in claim 4 wherein those surface portions of a nickel coating which are linked with the peripheral portion to be soldered but are not to be soldered are covered with a solder resist (41) prior to the soldering operation.

6. A method as claimed in claim 5 wherein the solder resist (41) is made of silicon dioxide.

7. A method as claimed in any one of claims 4 to 6 wherein
- a patterned etch resist layer is deposited for patterning the nickel coatings;
- the parts of the nickel coatings not covered by the etch resist layer are etched away, and
- the etch resist layer is then removed.

8. A method as claimed in claim 7 wherein the etch resist layer is formed using photolithographic techniques.

**Revendications**

1. Capteur de pression capacitif (10) comportant deux plaques (11, 12) en céramique d'oxyde d'aluminium,
- qui sont réunies dans la zone périphérique, à une distance définie l'une de l'autre et de manière à être parallèles entre-elles, en formant une chambre (14) fermée de manière étanche;
- dont l'une au moins (11) est réalisée en tant que membrane élastique;
- dont l'une au moins (12) porte sur sa surface dirigée vers l'autre plaque (11), à l'intérieur de la chambre (14), une ou plusieurs électrodes de condensateur (17, 20, 21);
- sur la surface externe de chacune desquelles est appliquée une couche de nickel pur (16, 18) fortement adhérente, déposée par voie chimique, à partir d'une solution aqueuse, sans mise en oeuvre de courant électrique, et dans laquelle sont réalisées les électrodes de condensateur (17, 20, 21) par structuration;
- qui sont reliées entre-elles dans la zone périphérique, par une brasure métallique (13) reliant les couches de nickel (16, 18), et
- au travers d'une (12) des plaques sont réalisés au moins deux trous de passage (30, 31, 32) également métallisés par la couche de nickel et faisant office de conducteurs de connexion qui relient les électrodes de condensateur à un circuit électronique disposé en-dehors de la chambre.

2. Capteur de pression capacitif selon la revendication 1, dans lequel au moins l'un (32) des trous nickelés est en liaison électrique avec une électrode de condensateur (16) portée par l'autre plaque, par l'intermédiaire de la brasure métallique (13).

3. Capteur de pression capacitif selon la revendication 1 ou 2, dans lequel des pistes de circuit imprimé (24) sont formées par structuration de la couche de nickel (18) sur la surface de l'une des deux plaques (12), éloignée de la chambre (14).

4. Procédé de fabrication d'un capteur de pression, selon lequel

- on fabrique deux plaques (11, 12) en céramique d'oxyde d'aluminium, dont l'une au moins est réalisée sous la forme de membrane élastique;
- on réalise dans l'une au moins des deux plaques des trous de passage (30, 31, 32);
- sur la surface de chaque plaque (11, 12) et sur les surfaces périphériques des trous de passage, on applique une couche de nickel pur (16, 18) fortement adhérente, déposée par voie chimique, à partir d'une solution aqueuse et sans mise en oeuvre de courant électrique;
- on structure les couches de nickel pour la formation d'électrodes de condensateur (17, 20, 21) et/ou de pistes de circuit imprimé (24);
- on superpose les deux plaques (11, 12) avec interposition d'une pièce de forme en brasure métallique (13) entre des parties des couches de nickel (16, 18) se trouvant dans la zone périphérique, et
- l'ensemble est chauffé jusqu'à la fusion de la brasure métallique.

5. Procédé selon la revendication 4, selon lequel les zones de surface d'une couche de nickel se raccordant à la zone périphérique devant être brasée, mais qui ne doivent pas subir le brasage, sont recouvertes avant le brasage, par une couche de réserve de brasage (41).

6. Procédé selon la revendication 5, selon lequel la couche de réserve de brasage (41) est constituée par du dioxyde de silicium.

7. Procédé selon l'une des revendications 4 à 6, selon lequel
   - une couche structurée de réserve d'attaque est appliquée, en vue de structurer les couches de nickel,
   - les parties des couches de nickel non protégées par la couche de réserve d'attaque, sont éliminées par attaque, et
   - la couche de réserve d'attaque est ensuite éliminée.

8. Procédé selon la revendication 7, selon lequel la couche de réserve d'attaque est formée par photolithographie.

# FIG.1

# FIG.2

FIG. 3

FIG. 4

FIG.5

FIG.6